(19) Europäisches Patentamt

European Patent Office

Office européen des brevets

(11) **EP 1 184 761 A2**

(12) **EUROPEAN PATENT APPLICATION**

(43) Date of publication:
06.03.2002 Bulletin 2002/10

(51) Int Cl.⁷: **G05B 19/19**

(21) Application number: 01306694.9

(22) Date of filing: 06.08.2001

(84) Designated Contracting States:
**AT BE CH CY DE DK ES FI FR GB GR IE IT LI LU MC NL PT SE TR**
Designated Extension States:
**AL LT LV MK RO SI**

(30) Priority: **11.08.2000 JP 2000244620**

(71) Applicant: **STAR MICRONICS CO., LTD.**
**Shizuoka-shi, Shizuoka (JP)**

(72) Inventors:
• **Sei, Yoshihiro.**
**Shizuoka-shi, Shizuoka (JP)**

• **Kajiyama, Takehisa**
**Shizuoka-shi, Shizuoka (JP)**
• **Endo, Nobuyuki**
**Shizuoka-shi, Shizuoka (JP)**
• **Shibazaki, Kunihisa**
**Shizuoka-shi, Shizuoka (JP)**

(74) Representative:
**Skone James, Robert Edmund et al**
**GILL JENNINGS & EVERY Broadgate House 7**
**Eldon Street**
**London EC2M 7LH (GB)**

(54) **Tool path preparing method and machining method**

(57)    The movement position of the roughing tool is calculated, in S109, by adding the finishing allowance to the movement position of the finishing tool so that the path of the roughing tool is shifted in the direction perpendicular to the rotation center axis of the main spindle rotation motor from the path of the finishing tool by the finishing allowance. Then, a gap between the movement position of the roughing tool in the direction of the rotation center axis of the main spindle rotation motor and the workpiece W is calculated, and when the gap is not larger than a predetermined value G, in S113, the movement position of the roughing tool is corrected in the direction perpendicular to the rotation center axis of the main spindle rotation motor so that the roughing tool does not cut in the inside of the finishing portion of the workpiece. The movement position of the roughing tool is corrected so that the movement speed of the roughing tool in the directionperpendicular to the rotation center axis of the main spindle rotation motor is a predetermined value.

FIG. 1

EP 1 184 761 A2

**Description**

The present invention relates to a tool path preparing method for preparing a tool path to simultaneously conduct a roughing and finishing operations, and to a machining method employing the tool path preparing method.

JP-A-63-200943 discloses a tool path preparing method and a machining method employing the tool path preparing method, for example. According to JP-A-63-200943, controlling a position of a finishing tool automatically controls another tool to operate simultaneously at a rough-cut position having a smaller depth of cut by an arbitrarily given finishing allowance. In other words, only the position of the tip of the finishing tool is programmed, and the roughing tool is automatically controlled at a rough cut position leaving only the finishing allowance.

However, there are the following problems in the tool path preparing method and machining method as disclosed in JP-A-63-200943.

If the path of the roughing tool is prepared by shifting the finishing tool in the direction of the main spindle by an offset distance between the roughing tool and the finishing tool, and further shifting it in the direction perpendicular to the main spindle by the finishing allowance, a cutting which includes the shape perpendicular to or approximately perpendicular to the main spindle (for example, a stepped portion) would be impossible, because the roughing operation cuts in to the inside of the finishing portion.

In order to prevent the cut-in by the roughing tool, it is necessary that a feed of the finishing tool is stopped, and the roughing tool is retreated to a position at which the cut-in is not caused, which results in a long machining time. Further, because the feed of the finishing tool is stopped, a scar (cutter mark) is generated on the workpiece at a position the finishing tool is stopped.

In view of the foregoing problems, an object of the present invention is to provide a tool path preparing method and a machining method employing the tool path preparing method by which the machining time of the workpiece by the roughing tool and the finishing tool is reduced, and the scar on the surface of the workpiece can be suppressed.

According to the present invention, there is provided a method of preparing a tool path to simultaneously conduct a roughing and a finishing operations by moving at least one of a workpiece to be rotated around a predetermined axis and tools including a roughing tool and a finishing tool offset-arranged in the axial direction of the predetermined axis, the method comprising:

 calculating a path of the roughing tool based on a path of the finishing tool by shifting the path of the finishing tool by a finishing allowance in the direction perpendicular to the predetermined axis; and

correcting the calculated path of the roughing tool so as to form a predetermined gap between the workpiece and the roughing tool in the axial direction of the predetermined axis.

In the tool path preparing method according to the present invention, after shifting the path of the finishing tool by a finishing allowance in the direction perpendicular to the predetermined axis to calculate the path of the rouging tool, the calculated path of the roughing tool is corrected so that a predetermined gap is formed between the workpiece and the roughing tool when viewed in the axis direction of the predetermined axis, therefore, the cut-in into the inside of the finishing portion by the roughing tool can be prevented without stopping the feed of the finishing tool. As the result, the machining time of the workpiece by the roughing tool and the finishing tool can be reduced. Further, because the feed of the finishing tool is not stopped, it can be suppressed that the cutter mark is formed on the surface of the workpiece by the finishing tool.

It is preferable that the path of the roughing tool is corrected so that the moving speed of the roughing tool in the direction perpendicular to the predetermined axis is a predetermined value. In such the manner, when the path of the roughing tool is corrected, by correcting the path of the roughing tool so that the movement speed of the roughing tool in the direction perpendicular to a predetermined axis is a predetermined value, the roughing tool can be smoothly moved, and the cutting load by the roughing tool can be decreased, and the variation of the cutting load can be suppressed.

It is preferable that the path of the roughing tool is corrected so that the roughing tool moves at a predetermined acceleration from a position, at which the gap between the workpiece and the roughing tool in the axis direction of the predetermined axis becomes a predetermined value, in the direction perpendicular to the predetermined axis. In this manner, when the path of the roughing tool is corrected, by correcting the path of the roughing tool so that the roughing tool is moved at a predetermined acceleration in the direction perpendicular to a predetermined axis from a position at which a gap between the workpiece and the roughing tool in the axis direction of the predetermined axis becomes a predetermined value, the path of the roughing tool can be easily corrected. Further, the variation of the cutting load by the roughing tool can be more suppressed.

According to the present invention, there is provided a method of machining a workpiece to be rotated around a predetermined axis, comprising:

 arranging tools including a roughing tool and a finishing tool offset in the axial direction of the predetermined axis;
 calculating a path of the roughing tool based on a path of the finishing tool by shifting the path of the finishing tool by a finishing allowance in the direction perpendicular to the predetermined axis;
correcting the calculated path of the roughing tool so as to form a predetermined gap between the workpiece and the roughing tool in the axial direction of the predetermined axis; and
moving at least one of the workpiece and the tools, thereby simultaneously conducting a roughing and a finishing operations.

Because, in the processing method according to the present invention, according to the tool path prepared by the tool path preparing method described in the first to the third aspects of the present invention, because the roughing and the finishing operations are simultaneously conducted by the roughing tool and the finishing tool, the cut-in into the inside of the finishing portion by the roughing tool can be prevented without stopping the feed of the finishing tool. As the result, the machining time of the workpiece by the roughing tool and the finishing tool can be reduced. Further, because the feed of the finishing tool is not stopped, it can be suppressed that the cutter mark is formed on the surface of the workpiece by the finishing tool.

Typically, the tool path can be prepared by a method comprising the steps of:

reading initial positions of a roughing tool and a finishing tool;
initializing the number of cumulative rotations of a workpiece to be rotated around a predetermined axis;
reading a position data calculation program;
settling a movement position of the finishing tool at a predetermined number of cumulative rotations of the workpiece;
calculating a movement position of the roughing tool at the predetermined number of cumulative rotations of the workpiece;
correcting the calculated movement position of the roughing tool in a direction perpendicular to and away from the predetermined axis when a gap between the roughing tool and the workpiece in the axial direction of the predetermined axis is not larger than a predetermined value; and
storing the movement position of the roughing tool and the finishing tool in a position data table memory.

BRIEF DESCRIPTION OF THE DRAWINGS

Fig. 1 is a block diagram showing the structure of a machine tool according to an embodiment of the present invention.
Fig. 2A is a view showing the shape of the workpiece before the processing, and Fig. 2B is a view showing the shape of the processed workpiece, both for explaining an example of a processing operation of a workpiece in the machine tool according to the embodiment of the present invention.
Fig. 3 is a flow chart for explaining a determination processing operation of movement positions of the roughing tool and the finishing tool.
Fig. 4 is a flow chart for explaining an output processing operation of the roughing tool position command signal and the finishing tool position command signal in the machine tool according to the embodiment of the present invention.
Fig. 5 is a diagram showing the path of the roughing tool and the path of the finishing tool in the machine tool according to the embodiment of the present invention.
Fig. 6 is a diagram showing the path of the roughing tool and the path of the finishing tool in the machine tool according to the embodiment of the present invention.
Fig. 7A is a diagram showing the change of the movement acceleration of the roughing tool, and Fig. 7B is a diagram showing the change of the movement speed of the roughing tool, both for explaining the operation of the roughing tool in the machine tool according to the embodiment of the present invention

Preferred embodiments of a tool path preparing method and a machining method will be described in detail below according to the present invention, with reference to the accompanying drawings. In this connection with the description on the drawings, the same parts as those of the conventional one are denoted by assigning the same reference numerals, and the duplication of the explanation will be omitted. In the present embodiments, an example in which the present invention is applied to a machine tool, and particularly, to a Swiss type machine tool, will be shown.

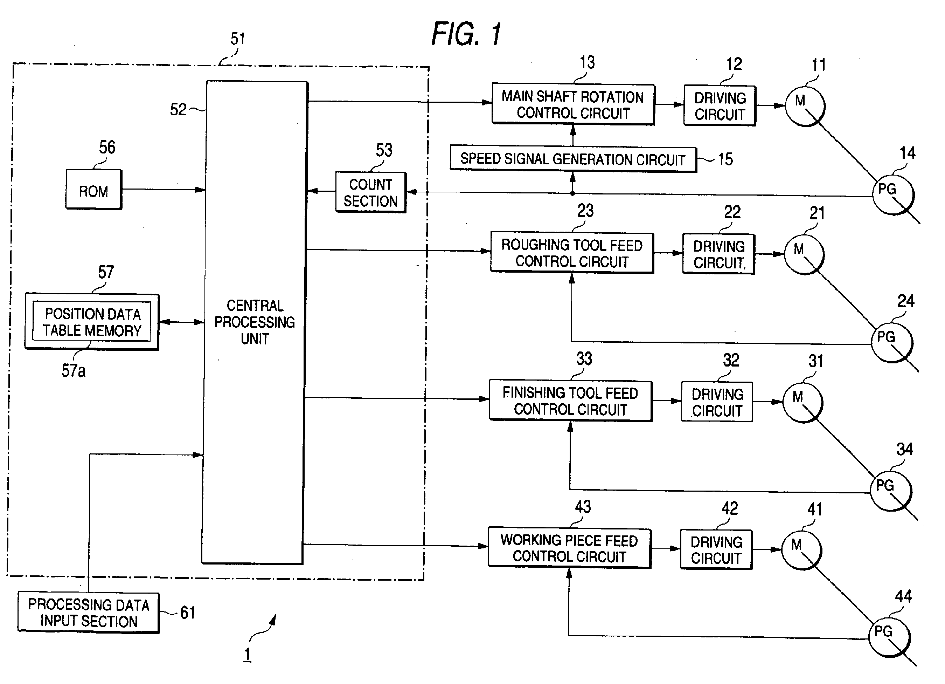

Fig. 1 is a block diagram showing the structure of a machine tool according to an embodiment of the present invention. In Fig. 1, a machine tool 1 has a main spindle rotation motor 11, roughing tool movement motor 21, finishing tool movement motor 31, workpiece movement motor 41, and control unit section 51 for controlling the drive of each of the motors 11, 21, 31, and 41.

The main spindle rotation motor 11 is a motor for rotating a main spindle (not shown) structured so that the workpiece can be held, and is connected to the control circuit section 51 through a driving circuit 12 and a main spindle rotation control circuit 13. Further, a pulse generator 14 for detecting the rotation of the main spindle rotation motor 11 is provided on the main spindle rotation motor 11. The output of the pulse generator 14 is connected to the control unit section 51 and a speed signal generation circuit 15, and the rotation detection signal outputted from the pulse generator 14 is inputted into the control unit section 51 and the speed signal generation circuit 15. The pulse generator 14 generates the rotation detection signal being synchronized with the rotation of the main spindle rotation motor 11 (main spindle), and outputs to the control unit section 51 and speed signal generation circuit 15. Herein, the rotation center axis of the main spindle rotation motor 11 (main spindle) constitutes an axis extending to a predetermined direction.

The speed signal generation circuit 15 converts the rotation detection signal outputted from the pulse generator 14 into the main spindle rotation speed signal which represents the rotation speed of the main spindle rotation motor 11 (main spindle). The output of the speed signal generation circuit 15 is connected to the main spindle rotation control circuit 13, and the converted main spindle rotation speed signal is inputted into the main spindle rotation control circuit 13.

The main spindle rotation control circuit 13 compares the main spindle rotation speed command signal outputted from the control unit section 51 which will be described later, to the main spindle rotation speed signal outputted from the main spindle rotation control circuit 13, and generates the control signal corresponding to the difference therebetween. The control signal generated by the main spindle rotation control circuit 13 is outputted to the driving circuit 12.

The driving circuit 12 controls electric power supply to the main spindle rotation motor 11 so that the rotation speed of the main spindle rotation motor 11 (main spindle) is the main spindle rotation speed command value, which will be described later, according to the control signal outputted from the main spindle rotation control circuit 13. These driving circuit 12, main spindle rotation control circuit 13, and speed signal generation circuit 15 constitute the feed back control system of the rotation speed of the main spindle rotation motor 11 (main spindle).

The roughing tool movement motor 21 is a motor to move the roughing tool to rough-cut the workpiece, for example, in the direction ($X_1$ axis direction) perpendicular to the rotation center axis of the main spindle rotation motor 11 (main spindle), and is connected to the control unit section 51 through a driving circuit 22 and a roughing tool feed control circuit 23. Further, to the roughing tool movement motor 21, a pulse generator 24 is provided to detect the rotation of the roughing tool movement motor 21. The output of the pulse generator 24 is connected to the roughing tool feed control circuit 23, and the rotation detection signal of the pulse generator 24 is inputted into the roughing tool feed control circuit 23. The pulse generator 24 generates the rotation position signal at each predetermined rotation angle of the roughing tool movement motor 21, and outputs it to the roughing tool feed control circuit 23.

The roughing tool feed control circuit 23 recognizes the actual movement position of the roughing tool according to the rotation position signal outputted from the pulse generator 24, and compares the movement position of the recognized actual roughing tool to the roughing tool position command signal outputted from the control unit section 51 which will be described later, and according to the comparison result, generates the roughing tool drive signal. The roughing tool drive signal generated in the roughing tool feed control circuit 23 is outputted to the driving circuit 22. The driving circuit 22 controls the electric power supply to the roughing tool movement motor 21 according to the roughing tool drive signal outputted from the roughing tool feed control circuit 23. These driving circuit 22 and the roughing tool feed control circuit 23 constitute the feed back control system of the movement position of the roughing tool.

The finishing tool movement motor 31 is a motor to move the finishing tool to finish-cut the workpiece, for example, in the direction ($X_2$ axis direction) perpendicular to the rotation center axis of the main spindle rotation motor 11 (main spindle), and is connected to the control unit section 51 through a driving circuit 32 and a finishing tool feed control circuit 33. Further, to the finishing tool movement motor 31, a pulse generator 34 is provided to detect the rotation of the finishing tool movement motor 31. The output of the pulse generator 34 is connected to the finishing tool feed control circuit 33, and the rotation detection signal of the pulse generator 34 is inputted into the finishing tool feed control circuit 33. The pulse generator 34 generates the rotation position signal at each predetermined rotation angle of the finishing tool movement motor 31, and outputs it to the finishing tool feed control circuit 33.

The finishing tool feed control circuit 33 recognizes the actual movement position of the finishing tool according to the rotation position signal outputted from the pulse generator 34, and compares the movement position of the recognized actual finishing tool to the finishing tool position command signal outputted from the control unit section 51 which will be described later, and according to the comparison result, generates the finishing tool drive signal. The finishing tool drive signal generated in the finishing tool feed control circuit 33 is outputted to the driving circuit 32. The driving circuit 32 controls the electric power supply to the finishing tool movement motor 31 according to the finishing tool drive signal outputted from the finishing tool feed control circuit 33. These driving circuit 32 and the finishing tool feed control circuit 33 constitute the feed back control system of the movement position of the finishing tool.

The workpiece movement motor 41 is a motor to move the workpiece, for example, in the direction (Z axis direction) in parallel with the rotation center axis of the main spindle rotation motor 11 (main spindle), and is connected to the control unit section 51 through a driving circuit 42 and a workpiece feed control circuit 43. Further, to the workpiece movement motor 41, a pulse generator 44 is provided to detect the rotation of the workpiece movement motor 41. The output of the pulse generator 44 is connected to the workpiece feed control circuit 43, and the rotation detection signal of the pulse generator 44 is inputted into the workpiece feed control circuit 43. The pulse generator 44 generates the rotation detection signal at each predetermined rotation angle of the workpiece movement motor 41, and outputs it to the workpiece feed control circuit 43.

The workpiece feed control circuit 43 recognizes the actual movement position of the workpiece according to the rotation detection signal outputted from the pulse generator 44, and compares the movement position of the recognized actual workpiece to the workpiece position command signal outputted from the control unit section 51 which will be described later, and according to the comparison result, generates the workpiece drive signal. The workpiece drive signal generated in the workpiece feed control circuit 43 is outputted to the driving circuit 42. The driving circuit 42 controls the electric power supply to the workpiece movement motor 41 according to the workpiece drive signal outputted from the workpiece feed control circuit 43. These driving circuit 42 and the workpiece feed control circuit 43 constitute the feed back control system of the movement position of the workpiece.

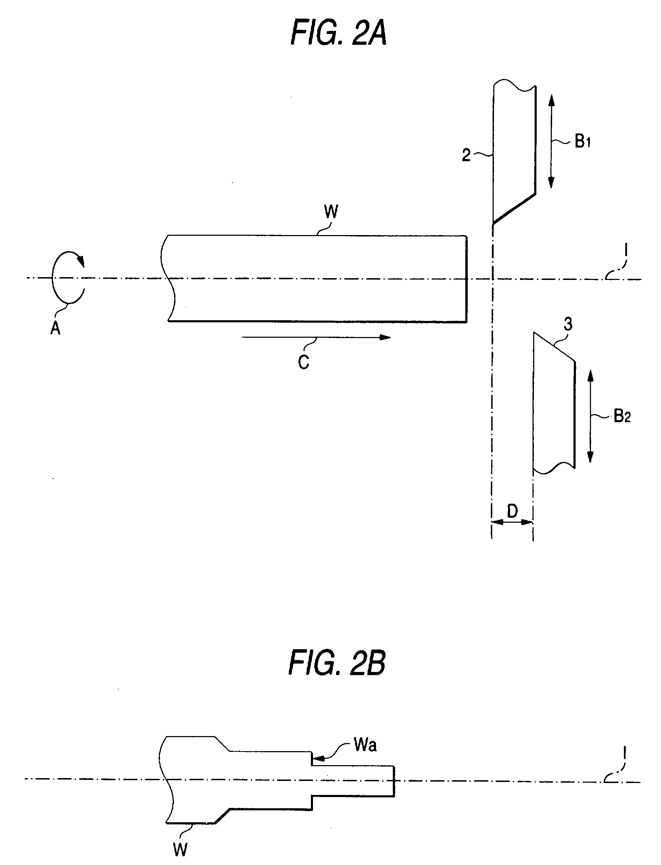

Fig. 2A is a view for explaining an example of the roughing and finishing operations of the workpiece W in the machine tool 1, and the shape of workpiece W to be machined is shown. The bar like workpiece W is, as shown in Fig. 2A, rotated around the rotation center axis 1 (in the arrowed direction A in Fig. 2A) of the main spindle rotation motor 11 (main spindle) by the main spindle rotation motor 11, and is moved in the direction in parallel with the rotation center axis 1 (in the arrowed direction C in Fig. 2A) of the main spindle rotation motor 11 by the workpiece movement motor 41.

The roughing tool 2 is moved in the direction (in the arrowed direction $B_1$ in Fig. 2A) perpendicular to the rotation center axis 1 of the main spindle rotation motor 11 by the roughing tool movement motor 21, and the workpiece W is roughly cut into a desired shape. The finishing tool 3 is moved in the direction (in the arrowed direction $B_2$ in Fig. 2A) perpendicular to the rotation center axis 1 of the main spindle rotation motor 11 by the finishing tool movement motor 31, and the workpiece W is finish-cut into a desired shape.

The roughing tool 2 and the finishing tool 3 are, as shown in Fig. 2A, arranged being offset by a predetermined distance (offset amount) D, viewed in the direction in which the rotation center axis 1 of the main spindle rotation motor 11 (main spindle) extends. Further, the roughing tool 2 and the finishing tool 3 are arranged at both sides of the rotation center axis 1 of the main spindle rotation motor 11 (main spindle) by sandwiching the axis between them, and the movement direction of the roughing tool 2 and the movement direction of the finishing tool 3 are set to be opposite to or cross each other.

In the present embodiment, as shown in Fig. 2B, the roughing and the finishing operations are conducted from each side of the workpiece W so that a stepped portion Wa having a surface almost perpendicular to the rotation center axis 1 of the main spindle rotation motor 11 (main spindle) may be formed on a portion of the bar-like workpiece W. By the movement of the workpiece W in the direction in parallel with the rotation center axis 1 of the main spindle rotation motor 11, the roughing and the finishing operations are simultaneously conducted, however, because the roughing tool 2 and the finishing tool 3 are arranged being offset, the roughing operation is conducted preceding to the finishing operation, on the workpiece W. In this connection, in Fig. 2A, the arrowed $B_1$ direction is the $X_1$ axis direction, the arrowed $B_2$ direction is the $X_2$ axis direction, and the arrowed C direction is the Z axis direction.

The control unit section 51, as shown in Fig. 1, has a central processing unit 52, count section 53, ROM 56, and RAM 57 . The central processing unit 52 is an operation section to conduct the signal processing of the whole of the control unit section 51. The count section 53 is connected to the pulse generator 14, and is structured in such a manner that the pulse signal outputted from the pulse generator 14 is inputted through the interface, and the number of occurrences of the inputted pulse signals is counted. Further, the count section 53 is also connected to the central processing unit 52, and is also structured in such a manner that the counted number of occurrences of the rotation detection signals inputted from the pulse generator 14, is outputted to the central processing unit 52.

The ROM 56 is a memory section to store various processing programs, including a position data calculation program. The position data calculation program is a calculation program to define the movement position of the roughing tool 2 and the movement position of the finishing tool 3 at each predetermined number of cumulative rotations $\theta_n$ of the main spindle rotation motor 11 (main spindle) .

The RAM 57 is structured in such a manner that the result of various operations in the central processing unit 52 is temporarily stored so that it can be read out, and the position data table memory 57a is also stored. The position data table memory 57a is structured in such a manner that the movement position of the roughing tool 2 and the movement position of the finishing tool 3 at each predetermined number of cumulative rotations $\theta_n$ of the main spindle rotation motor 11 (main spindle) defined by the position data calculation program are respectively stored as the position data of the roughing tool 2 and the position data of the finishing tool 3. Herein, the position data (movement position) of the roughing tool 2 shows the path of the roughing tool 2, and the position data (movement position) of the finishing tool 3 shows the path of the finishing tool 3.

The machining data input section 61 is, as shown in Fig. 1, a section in which various data relating to the machining of the workpiece W such as shape data and machining conditions are inputted, and the data inputted into the machining data input section 61 are sent to the central processing unit 52. The shape data include the finishing dimension , and the processing conditions include the accuracy and the material of the workpiece W, and the data relating to the machining mode such as the roughing or finishing operation.

Further, the central processing unit 52 calculates the accumulated number of cumulative rotation of the main spindle rotation motor 11 (main spindle) according to the count result by the count section 53 of the number of occurrences of the rotation detection signals inputted from the pulse generator 14.

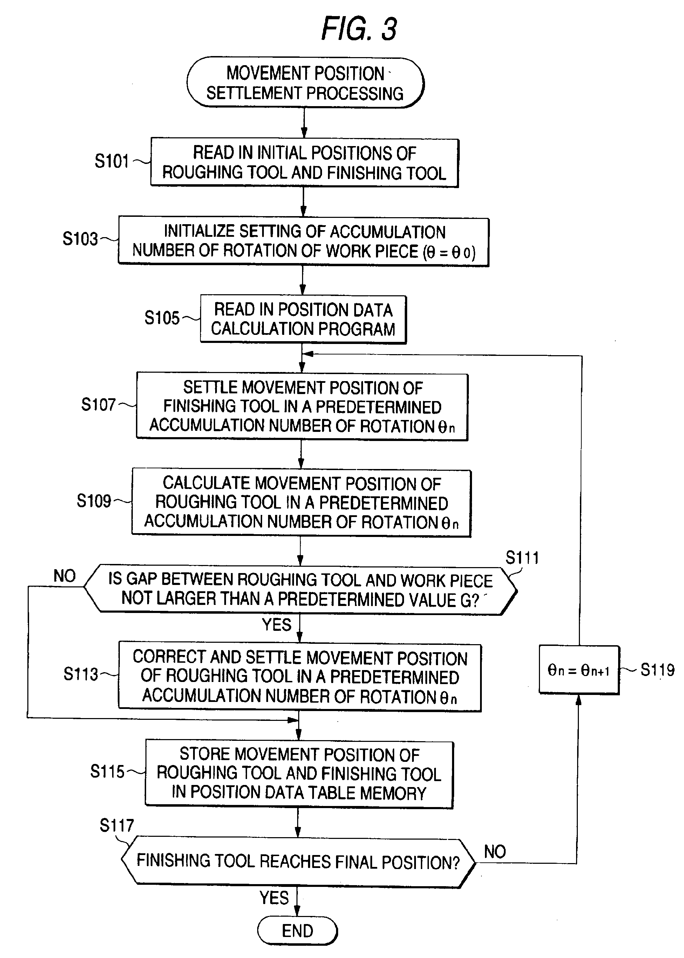

Next, according to Fig. 3, the process operation to define the movement position of the roughing tool 2 and the movement position of the finishing tool 3 in the central processing unit 52 (control unit section 51) will be described.

Initially, in S101, the central processing unit 52 reads the initial positions of the roughing tool 2 and the finishing tool 3. In Next S103, the initial setting ($\theta = \theta_0$) of the number of cumulative rotations $\theta$ is conducted, and the sequence advances to S105. In S105, the central processing unit 52 reads the position data calculation program from the ROM 56. In the next S107, by using the position data calculation program, according to the shape data and the machining conditions inputted in the processing data input section 61, the central processing unit 52 calculates and defines the movement position (the movement position in the $X_2$ direction) of the finishing tool 3 in the predetermined number of cumulative rotations $\theta_n$ of the main spindle rotation motor 11 (main spindle), and advances to S109.

In S109, by using the position data calculation program, according to the movement position of the finishing tool 3 defined in S107, the central processing unit 52 calculates the movement position (the movement position in the $X_1$ direction) of the roughing tool 2 in the predetermined number of cumulative rotations $\theta_n$ of the main spindle rotation motor 11 (main spindle). In the calculation of the movement position of the roughing tool 2, the offset amount D of the roughing tool 2 and the finishing tool 3, and finishing allowance f are considered. The movement position of the roughing tool 2 is calculated by adding the finishing allowance f to the movement position of the finishing tool 3 so that the path of the roughing tool 2 is shifted in the direction perpendicular to the rotation center axis 1 of the main spindle rotation motor 11 by the finishing allowance f from the path of the finishing tool 3.

In next S111, a gap between the movement position of the roughing tool 2 calculated in S109 in the direction of the rotation center axis 1 of the main spindle rotation motor 11 and the workpiece W is calculated, and it is determined whether this gap is not larger than a predetermined value G. When the gap between the movement position of the roughing tool 2 in the direction of the rotation center axis 1 of the main spindle rotation motor 11 and the workpiece W is not larger than the predetermined value G (in S111, (Yes)), the sequence advances to S113. On the one hand, when it is larger than the predetermined value (in S111, (No)), the sequence advances to S115. The predetermined value G is set according to the feed speed of the workpiece W, the height of the stepped portion Wa of the workpiece W, the movable speed of the roughing tool 2, and finishing allowance f.

In S113, the movement position of the roughing tool 2 is corrected and defined in the direction ($X_1$ direction) perpendicular to the rotation center axis 1 of the main spindle rotation motor 11 so that the roughing tool 2 does not cut in the inside of the finishing portion of the workpiece W. Herein, the movement position of the roughing tool 2 is corrected so that the movement speed of the roughing tool 2 in the direction perpendicular to the rotation center axis 1 of the main spindle rotation motor 11 is a predetermined value.

In next S115, the movement position of the finishing tool 3 defined in S107, and the movement position of the roughing tool 2 defined in S113 are stored in the position data table memory 57a of the RAM 57 as the position data of the roughing tool 2 and the position data of the finishing tool 3 corresponding to a predetermined number of cumulative rotations $\theta_n$. After that, the sequence advances to S117, and according to the number of cumulative rotations of the main spindle rotation motor 11 (main spindle), it is determined whether the finishing tool 3 reaches the end portion (final position) of the finishing area of the workpiece W. When the finishing tool 3 reaches the end portion (final position) of the finishing area of the workpiece W (in S117, (Yes)), the processing ends.

On the one hand, when the finishing tool 3 does not reach the end portion (final position) of the finishing area of the workpiece W (in S117, (No)), the number of cumulative rotations $\theta_n$ of the workpiece W is changed to $\theta_{n+1}$ in S119, and the sequence returns to S107, and the movement position of the finishing tool 3 in the predetermined number of cumulative rotations $\theta_n$ of a new workpiece W is defined, and the processing is continued,

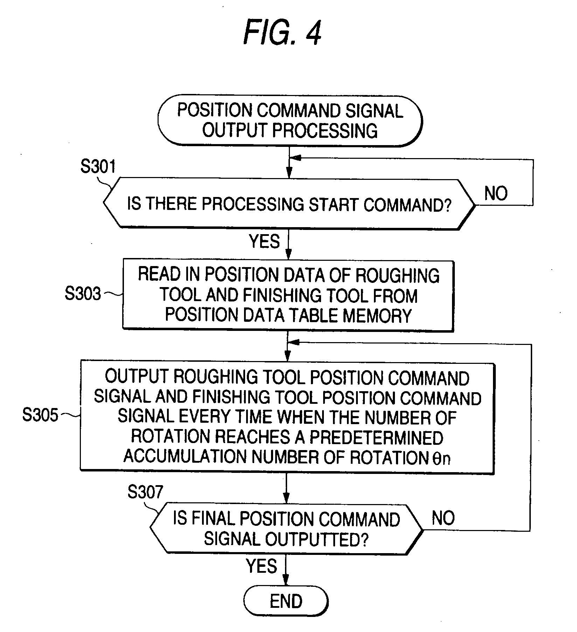

Next, according to Fig. 4, the output operation of the roughing tool position command signal and the finishing tool position command signal in the central processing unit 52 (control unit section 51) will be described.

The central processing unit 52 determines, initially in S301, whether the finishing start command is outputted. When the finishing start command is outputted (in S301, (Yes)), the sequence advances to S303. When the finishing start command is not outputted (in S301, (No)), the sequence returns and is ready for until the finishing start command is outputted.

When the sequence advances to S303, the central processing unit 52 reads the position data of the roughing tool 2 and the position data of the finishing tool 3 stored in the position data table memory 57a of the RAM 47. When the position data of the roughing tool 2 and the position data of the finishing tool 3 are read, the sequence advances to S305, and the central processing unit 52 outputs the position data of the roughing tool 2 showing the movement position of the roughing tool 2 as the roughing tool position command signal to the roughing tool feed control circuit 23, and the position data of the finishing tool 3 showing the movement position of the finishing tool 3 as the finishing tool position command signal to the finishing tool feed control circuit 33. The roughing tool position command signal and the finishing tool position command signal are outputted according to the count result in the count section 53. In details, according to the count result in the count section 53, every time when a predetermined number of cumulative rotations of the main spindle rotation motor 11 (main spindle) reaches the predetermined number of cumulative rotations $\theta_n$ set in the position data table memory 57a, the corresponding rouging tool position command signal and the finishing tool position command signal are outputted.

After that, in S307, it is determined whether the rouging tool position command signal and the finishing tool position command signal corresponding to the final position data among the position data of the roughing tool 2 and the finishing tool 3 are outputted. When the rouging tool position command signal and the finishing tool position command signal corresponding to the final position data are not outputted (in S307, (No)), the sequence returns to S305, and every time when the number of cumulative rotations of the main spindle rotation motor 11 (main spindle) reaches the predetermined number of cumulative rotations $\theta_n$, the rouging tool position command signal and the finishing tool position command signal are successively outputted, thereby, the roughing and finishing operations are simultaneously done on the workpiece W. When the rouging tool position command signal and the finishing tool position command signal corresponding to the final position data are outputted (in S307, (Yes)), the processing operation ends.

The central processing unit 52 (control unit section 51) defines the main spindle rotation speed command value appropriate for the roughing and the finishing operations, and outputs the defined main spindle rotation speed command value as the main spindle rotation speed command signal to the main spindle rotation control circuit 13. The main spindle rotation control circuit 13 outputs the control signal to the driving circuit 12 according to the main spindle rotation speed command signal inputted from the central processing unit 52 so that the rotation speed of the main spindle rotation motor 11 (main spindle) is a predetermined rotation speed. Further, the central processing unit 52 (control unit section 51) defines the movement position of the workpiece W appropriate for the roughing and finishing operations (the position data of the workpiece W), and outputs the movement position of the workpiece W as the workpiece position command signal to the workpiece feed control circuit 43. The workpiece position feed control circuit 43 outputs the control signal to the driving circuit 42 according to the workpiece position command signal inputted from the central processing unit 52.

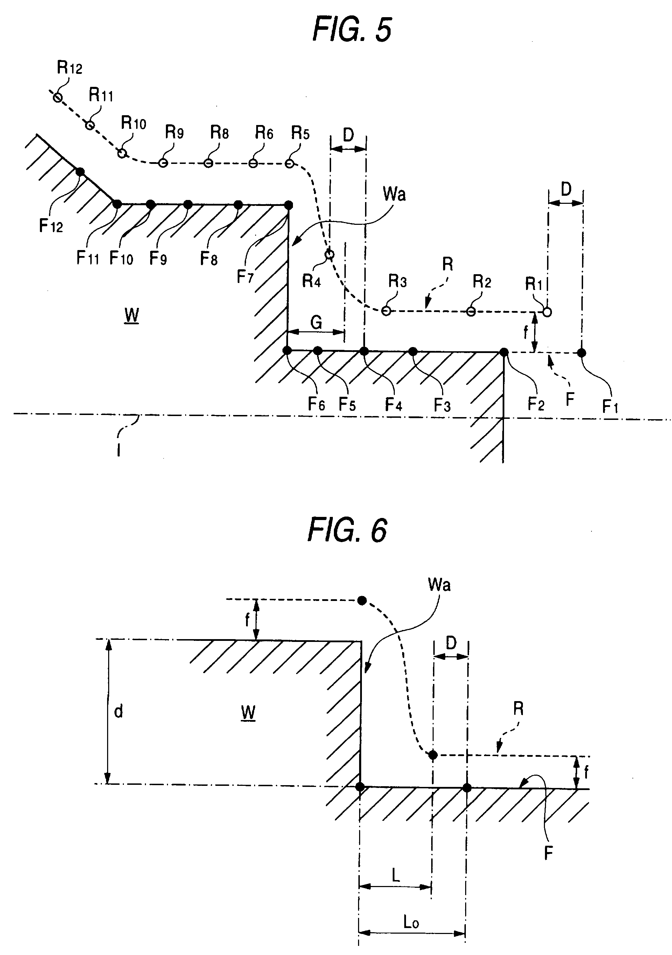

Next, by using Fig. 5, the path of the roughing tool 2 and the path of the finishing tool 3 according to the movement position of the roughing tool 2 and the movement position of the finishing tool 3 defined in the central processing unit 52 (control unit section 51), will be described. In this connection, in Fig. 5, for the explanation, the drawing is shown as a condition in which the $X_1$ direction and the $X_2$ direction are in the same direction, and the path of the roughing tool 2 and the path of the finishing tool 3 are overlapped with each other.

As shown in Fig. 5, the path F of the finishing tool 3 to the workpiece W is prepared so that it overlaps with the outside shape of the workpiece W. In Fig. 5, $F_1$ - $F_{12}$ show the movement positions of the finishing tool 3 at every predetermined number of cumulative rotations of the main spindle rotation motor 11 (main spindle).

The path R of the roughing tool 2 to the workpiece W is prepared, as shown in Fig. 5, in such a manner that it is shifted by the finishing allowance f from the path F of the finishing tool 3, viewed in the direction perpendicular to the rotation center axis 1 of the main spindle rotation motor 11. In Fig. 5, R1 - R12 show the movement positions of the roughing tool 2 at every predetermined number of cumulative rotations of the main spindle rotation motor 11 (main spindle), and the same subscript in the drawing shows the same number of cumulative rotations, for example, the movement position $F_1$ of the finishing tool 3 and the movement position $R_1$ of the roughing tool 2 show the movement position at the same number of cumulative rotations. Further, the movement position of the roughing tool 2 and the movement position of the finishing tool 3 of the same subscript are shifted by the offset amount D between the roughing tool 2 and the finishing tool 3, viewed in the direction of the rotation center axis 1 of the main spindle rotation motor 11.

From the movement position $R_3$ of the roughing tool 2 to the movement position $R_5$ of the roughing tool 2, because a gap between the movement position of the roughing tool 2 in the direction of the rotation center axis 1 of the main spindle rotation motor 11 and the workpiece W is not larger than a predetermined value, the movement position of the roughing tool 2 is corrected so that it is moved in the direction perpendicular to the rotation center axis 1 of the main spindle rotation motor 11, as the workpiece W is moved (fed) in the direction of rotation center axis 1 of the main spindle rotation motor 11. The movement position of the roughing tool 2 is corrected so that the movement speed of the roughing tool 2 in the direction perpendicular to the rotation center axis 1 of the main spindle rotation motor 11 is a predetermined value.

Thereby, the path R of the roughing tool 2 to the workpiece W is prepared in such a manner that the movement position of the roughing tool 2 and the movement position of the finishing tool 3 of the same subscript are shifted by the amount more than the finishing allowance f, viewed in the direction perpendicular to the rotation center axis 1 of the main spindle rotation motor 11, between the movement position $R_3$ and the movement position $R_5$ of the roughing tool 2. As the result, a predetermined gap is formed between the workpiece in the direction of the rotation center axis 1 of the main spindle rotation motor 11 and the roughing tool 2, and the roughing tool 2 does not cut in the inside of the finishing portion of the workpiece W. In this connection, the shifting amount between the movement position of the roughing tool 2 and the movement position of the finishing tool 3 while the movement position of the roughing tool 2 is corrected, viewed in the direction of the rotation center axis 1 of the main spindle rotation motor 11, becomes the offset value D between the roughing tool 2 and the finishing tool 3, and does not change.

At the movement position $F_6$ of the finishing tool 3 (the movement position $R_6$ of the roughing tool 2), the finishing tool 3 reaches the stepped portion Wa of the workpiece W. At the movement position $F_6$ of the finishing tool 3, the movement (feed) of the workpiece W in the direction of the rotation center axis 1 of the main spindle rotation motor 11 is stopped. When the feed of the workpiece W is stopped, the finishing tool 3 is moved to the movement position F7 of the finishing tool 3 in the direction perpendicular to the rotation center axis 1 of the main spindle rotation motor 11. At this time, the roughing tool 2 is not moved, and stops at the movement position $R_6$ of the roughing tool 2. When the roughing tool 2 stops at the movement position $R_6$, the cutter mark by the roughing tool 2 is formed on the surface of the workpiece W, however, because this portion is cut off by the finishing tool 3, the cutter mark by the roughing tool 2 does not remain on the surface of the finished workpiece W.

When the finishing tool 3 reaches the movement position $F_7$, the movement (feed) of the workpiece W in the direction of the rotation center axis 1 of the main spindle rotation motor 11 starts, thereby, the roughing tool 2 and the finishing tool 3 are relatively moved to the workpiece W in the direction of the rotation center axis 1 of the main spindle rotation motor 11.

In this manner, according to the present embodiment, the movement position of the roughing tool 2 is calculated so that it may be shifted with respect to the finishing tool 3 by the finishing allowance f in the direction perpendicular to the rotation center axis 1 of the main spindle rotation motor 11, and then it is corrected so that a predetermined gap is formed between the workpiece W and the roughing tool 2, viewed in the direction of the rotation center axis 1 of the main spindle rotation motor 11. Thereby, the path R of the roughing tool 2 calculated by shifting the path F of the finishing tool 3 by the finishing allowance f in the direction perpendicular to the rotation center axis 1 of the main spindle rotation motor 11 is corrected so that a predetermined gap is formed between the workpiece W and the roughing tool 2, viewed in the direction of the rotation center axis 1 of the main spindle rotation motor 11. Thereby, the feed of the finishing tool 3 (feed of the workpiece W) in the direction of the rotation center axis 1 of the main spindle rotation motor 11 is not stopped, and the cut-in into the inside of the finishing portion of the workpiece W by the roughing tool 2 can be prevented. As the result, the machining time of the workpiece W by the roughing tool 2 and the finishing tool 3 can be reduced. Further, because the feed of the finishing tool 3 (feed of the workpiece W) is not stopped, the formation of the cutter mark on the surface of the workpiece W by the finishing tool 3 can be suppressed.

Further, when the movement position of the roughing tool 2 is corrected, because the movement position of the roughing tool 2 is corrected so that the movement speed of the roughing tool 2 in the direction perpendicular to the rotation center axis 1 of the main spindle rotation motor 11 is a predetermined value, the path R of the roughing tool 2 is also corrected so that the movement speed of the roughing tool 2 in the direction perpendicular to the rotation center axis 1 of the main spindle rotation motor 11 is a predetermined value. Thereby, the roughing tool 2 can be smoothly moved, and the cutting load of the workpiece W by the roughing tool 2 can be reduced, and the variation of the cutting load can be suppressed.

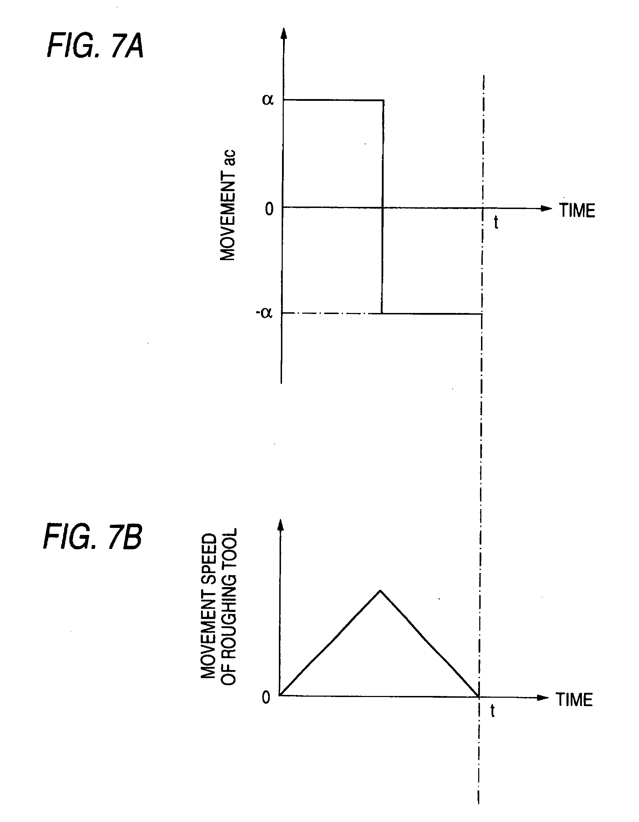

Next, referring to Fig. 6 and Figs. 7A and 7B, a varied example of the correction of the movement position (the path) of the roughing tool 2 will be described. The varied example shown in Fig. 6 and Figs. 7A and 7B is an example in which the movement position of the roughing tool 2 is corrected so that the roughing tool 2 moves at the equal acceleration.

The relative position of the finishing tool 3 to the workpiece W, at which the correction of the movement position of the roughing tool 2 is to be started, is defined as follows. Initially, according to the formula (1), the time interval t to correct the movement position of the roughing tool 2 is found.

$$d/2 = 1/2 \times \alpha \times (t/2)^2 \qquad (1)$$

d:   The height of the stepped portion Wa of the workpiece W
α:   The movement acceleration of the roughing tool 2

When the time interval t to correct the movement position of the roughing tool 2 is found, according to the formula (2), a division distance L to correct the movement position of the roughing tool 2 is found.

$$L = V_z \times t \qquad (2)$$

$V_z$:    the feed speed of the workpiece W

Finally, according to the formula (3), the relative position (distance from the stepped portion Wa of the workpiece W) $L_0$ of the finishing tool 3 to the workpiece W, at which the correction of the movement position of the roughing tool 2 is to be started, is found.

$$L_0 = L + D \qquad (3)$$

D:    the offset amount between the roughing tool 2 and the finishing tool 3

When the position of the finishing tool 3 in the direction of the rotation center axis 1 of the main spindle rotation motor 11 reaches the position apart by the difference $L_0$ from the stepped portion Wa of the workpiece W, as shown in Fig. 6, the correction of the movement position of the roughing tool 2 is carried out. That is, the movement position of the roughing tool 2 is corrected during a time period from the time when the roughing tool 2 reaches the position apart by the distance L from the stepped portion Wa of the workpiece W, to the time when the workpiece W is fed by L/2. That is, the movement position of the roughing tool 2 is corrected in such a manner that, while the time elapses by t/2 from the start of the correction of movement position of the roughing tool 2, as shown in Figs. 7A and 7B, the roughing tool 2 is acceleratedly moved by the movement acceleration α, in the direction perpendicular to the rotation center axis 1 of the main spindle rotation motor 11. Then, while the feed distance of the workpiece W from the start of the correction of the movement position of the roughing tool 2 is changed from L/2 to L, that is, the time from the start of the correction of movement position of the roughing tool 2 reaches from t/2 to t, the movement position of the roughing tool 2 is corrected so that the roughing tool 2 is deceleratedly moved by the movement acceleration α, in the direction perpendicular to the rotation center axis 1 of the main spindle rotation motor 11.

As described above, when the correction of the movement position of the roughing tool 2 is carried out from the time when the position of the finishing tool 3 reaches the position apart from the stepped portion Wa of the workpiece W by the distance $L_0$ (the position of the roughing tool 2 apart from the stepped portion Wa of the workpiece W by the distance L), the path R of the roughing tool 2 is prepared with a predetermined gap between the workpiece W and the roughing tool 2, viewed in the direction of the rotation center axis 1 of the main spindle rotation motor 11. Therefore, the feed of the finishing tool 3 in the direction of the rotation center axis 1 (the feed of the workpiece W) is not stopped, and the cut-in into the inside of the finishing portion of the workpiece W by the roughing tool 2 canbe prevented. As the result, the machining time of the workpiece W by the roughing tool 2 and the finishing tool 3 can be reduced. Further, because the feed of the finishing tool 3 (the feed of the workpiece W) is not stopped, the formation of the cutter mark on the surface of the workpiece W by the finishing tool 3 can be suppressed.

Further, the movement position of the roughing tool 2 (the path of the roughing tool 2) is easily corrected because the movement position of the roughing tool 2 is corrected so that the roughing tool 2 is moved while it is accelerated or decelerated at the movement acceleration α in the direction perpendicular to the rotation center axis 1 of the main spindle rotation motor 11. Further, because the movement speed of the roughing tool 2 after the start of the correction and before the end of the correction is lower, the variation of the cutting load on the workpiece W by the roughing tool 2, vibration of the workpiece W, and the vibration of the roughing tool 2, can be further suppressed, and the scar on the surface of the workpiece can be more suppressed.

In this connection, in the present embodiment, it is structured in such a manner that the workpiece can be moved in the direction of the rotation center axis 1 of the main spindle rotation motor 11, and the workpiece W is sent to this direction, but the present invention is not limited to this, and it may be structured in such a manner that the roughing tool 2 and the finishing tool 3 are moved in the direction of the rotation center axis 1 of the main spindle rotation motor 11.

Further, in the present embodiment, it is structured in such a manner that the count section 53 is provided in the control unit section 51, but, it may be structured in such a manner that the program is made so that the central processing unit 52 performs the role of the count section 53 utilizing the ROM 56 as storing means. Instead, a portion of functions which are performed by the central processing unit 52 may be replaced by the hardware circuit.

Further, in the present embodiment, it is structured in such a manner that the position data (movement position) of the roughing tool 2 showing the path of the roughing tool 2 and the position data (movement position) of the finishing tool 3 showing the path of the finishing tool 3 are stored corresponding to every predetermined number of cumulative rotations of the main spindle rotation motor 11 (main spindle) and stored, and every time when the number of cumulative rotations of the main spindle rotation motor 11 (main spindle) reaches a predetermined one, set in the position data table memory 57a, the corresponding position data of the roughing tool 2 and the finishing tool 3 are outputted as the roughing tool position command signal and the finishing tool position command signal, but the present invention is not limited to this. For example, it may be structured in such a manner that every time when the number of cumulative rotations of the main spindle rotation motor 11 (main spindle) reaches a predetermined number of cumulative rotations $\theta_n$, the position data (movement position) of the roughing tool 2 showing the path of the roughing tool 2 and the position data (movement position) of the finishing tool 3 showing the path of the finishing tool 3 may be calculated and found, and outputted as the roughing tool position command signal and the finishing tool position command signal.

As described above, the present invention provides a tool path preparing method and a machining method by which the machining time of the workpiece by the roughing tool and the finishing tool can be reduced, and the scar on the surface of the workpiece can be suppressed..

## Claims

1. A method of preparing a tool path to simultaneously conduct a roughing and a finishing operations by moving at least one of a workpiece to be rotated around a predetermined axis and tools including a roughing tool and a finishing tool offset-arranged in the axial direction of the predetermined axis, the method comprising:

   calculating a path of the roughing tool based on a path of the finishing tool by shifting the path of the finishing tool by a finishing allowance in the direction perpendicular to the predetermined axis; and
   correcting the calculated path of the roughing tool so as to form a predetermined gap between the workpiece and the roughing tool in the axial direction of the predetermined axis.

2. The method according to claim 1, wherein the path of the roughing tool is corrected so that the moving speedof the roughing tool in the direction perpendicular to the predetermined axis is a predetermined value.

3. The method according to claim 1, wherein the path of the roughing tool is corrected so that the roughing tool moves at a predetermined acceleration from aposition, at which the gap between the workpiece and the roughing tool in the axis direction of the predetermined axis becomes a predetermined value, in the direction perpendicular to the predetermined axis.

4. A method of machining a workpiece to be rotated around a predetermined axis, comprising:

   arranging tools including a roughing tool and a finishing tool offset in the axial direction of the predetermined axis;

calculating a path of the roughing tool based on a path of the finishing tool by shifting the path of the finishing tool by a finishing allowance in the direction perpendicular to the predetermined axis;
correcting the calculated path of the roughing tool so as to form a predetermined gap between the workpiece and the roughing tool in the axial direction of the predetermined axis; and
moving at least one of the workpiece and the tools, thereby simultaneously conducting a roughing and a finishing operations.

5. The method according to claim 4, wherein the path of the roughing tool is corrected so that the moving speed of the roughing tool in the direction perpendicular to the predetermined axis is a predetermined value.

6. The method according to claim 4, wherein the path of the roughing tool is corrected so that the roughing tool moves at a predetermined acceleration from a position, at which the gap between the workpiece and the roughing tool in the axis direction of the predetermined axis becomes a predetermined value, in the direction perpendicular to the predetermined axis.

7. A tool path preparing method comprising:

   reading initial positions of a roughing tool and a finishing tool;
   initializing the number of cumulative rotations of a workpiece to be rotated around a predetermined axis;
   reading a position data calculation program;
   settling a movement position of the finishing tool at a predetermined number of cumulative rotations of the workpiece;
   calculating a movement position of the roughing tool at the predetermined number of cumulative rotations of the workpiece;
   correcting the calculated movement position of the roughing tool in a direction perpendicular to and away from the predetermined axis when a gap between the roughing tool and the workpiece in the axial direction of the predetermined axis is not larger than a predetermined value; and
   storing the movement position of the roughing tool and the finishing tool in a position data table memory.

FIG. 1

EP 1 184 761 A2

# FIG. 2A

# FIG. 2B

# FIG. 3

MOVEMENT POSITION
SETTLEMENT PROCESSING

S101 — READ IN INITIAL POSITIONS OF
ROUGHING TOOL AND FINISHING TOOL

S103 — INITIALIZE SETTING OF ACCUMULATION
NUMBER OF ROTATION OF WORK PIECE ($\theta = \theta 0$)

S105 — READ IN POSITION DATA
CALCULATION PROGRAM

S107 — SETTLE MOVEMENT POSITION OF
FINISHING TOOL IN A PREDETERMINED
ACCUMULATION NUMBER OF ROTATION $\theta n$

S109 — CALCULATE MOVEMENT POSITION OF
ROUGHING TOOL IN A PREDETERMINED
ACCUMULATION NUMBER OF ROTATION $\theta n$

S111
NO — IS GAP BETWEEN ROUGHING TOOL AND WORK PIECE
NOT LARGER THAN A PREDETERMINED VALUE G?

YES

S113 — CORRECT AND SETTLE MOVEMENT POSITION
OF ROUGHING TOOL IN A PREDETERMINED
ACCUMULATION NUMBER OF ROTATION $\theta n$

$\theta n = \theta n+1$ — S119

S115 — STORE MOVEMENT POSITION OF
ROUGHING TOOL AND FINISHING TOOL
IN POSITION DATA TABLE MEMORY

S117
FINISHING TOOL REACHES FINAL POSITION? — NO

YES

END

# FIG. 4

```
        ┌──────────────────────────────┐
        │  POSITION COMMAND SIGNAL     │
        │     OUTPUT PROCESSING        │
        └──────────────────────────────┘
```

S301

IS THERE PROCESSING START COMMAND?  →  NO

YES

S303 — READ IN POSITION DATA OF ROUGHING TOOL AND FINISHING TOOL FROM POSITION DATA TABLE MEMORY

S305 — OUTPUT ROUGHING TOOL POSITION COMMAND SIGNAL AND FINISHING TOOL POSITION COMMAND SIGNAL EVERY TIME WHEN THE NUMBER OF ROTATION REACHES A PREDETERMINED ACCUMULATION NUMBER OF ROTATION $\theta_n$

S307

IS FINAL POSITION COMMAND SIGNAL OUTPUTTED?  →  NO

YES

END

## FIG. 5

## FIG. 6

FIG. 7A

MOVEMENT ac

α

0

-α

TIME

t

FIG. 7B

MOVEMENT SPEED
OF ROUGHING TOOL

0

TIME

t